Europäisches Patentamt
European Patent Office
Office européen des brevets

(19)

(11) Veröffentlichungsnummer: **0 412 577 A1**

(12)
# EUROPÄISCHE PATENTANMELDUNG

(21) Anmeldenummer: **90117740.2**

(22) Anmeldetag: **06.05.87**

(51) Int. Cl.[5]: **A01N 57/20**, //(A01N57/20, 43:50)

Diese Anmeldung is am 14 - 09 - 1990 als Teilanmeldung zu der unter INID-Kode 60 erwähnten Anmeldung eingereicht worden.

(30) Priorität: **09.05.86 DE 3615711**

(43) Veröffentlichungstag der Anmeldung: **13.02.91 Patentblatt 91/07**

(60) Veröffentlichungsnummer der früheren Anmeldung nach Art. 76 EPÜ: **0 252 237**

(84) Benannte Vertragsstaaten: **AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Mildenberger, Hilmar, Dr.**
**Fasanenstrasse 24**
**D-6233 Kelkheim (Taunus)(DE)**
Erfinder: **Bauer, Klaus, Dr.**
**Doorner Strasse 53 D**
**D-6450 Hanau(DE)**
Erfinder: **Bieringer, Hermann, Dr.**
**Eichenweg 26**
**D-6239 Eppstein/Taunus(DE)**
Erfinder: **Willms, Lothar, Dr.**
**Schulstrasse 3**
**D-5416 Hillscheid(DE)**
Erfinder: **Langelüddeke, Peter, Dr.**
**Nelkenweg 5**
**D-6238 Hofheim am Taunus(DE)**

(54) **Herbizide Mittel.**

(57) Gegenstand der Erfindung sind herbizide Mittel, die einen Wirkstoff der Formel I,

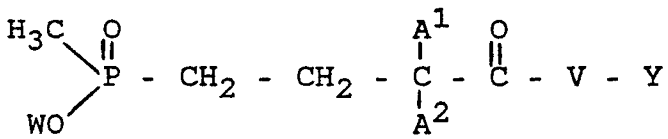

(I)

worin $A^1$ = H und $A^2$ = $NH_2$ oder $A^1$, $A^2$ zusammen ein Sauerstoffatom, V = O oder NH, Y = im Falle V = O Wasserstoff oder Alkyl oder im Falle V = NH einen Rest der Formeln $-CH(CH_3)-CONH-CH(CH_3)-COOH$ oder $-CH(CH_3)-CONH-CH-[CH_2CH(CH_3)_2]-COOH$ bedeutet, und W = Wasserstoff bedeutet, oder dessen Salz, in Kombination mit einer Verbindung der Formel II oder II′ oder deren Salzen

EP 0 412 577 A1

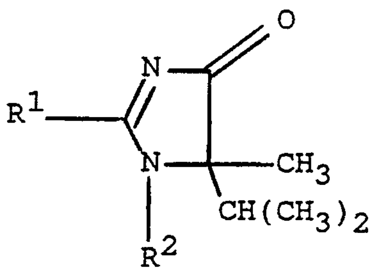 (II)

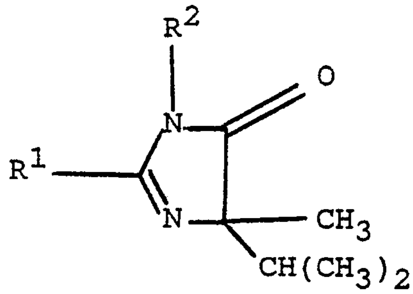 (II')

worin
$R^1$ = einen (substituierten) Phenyl-, Pyridyl- oder Chinolinyl-Rest, und $R^2$ = H, einen Rest der Formeln -CONH-(alkyl), -OCO, -CO(alkyl) bedeuten, enthalten. Diese besitzen vorteilhafte Wirkungen gegenüber annuellen und perennierenden Unkräutern.

## HERBIZIDE MITTEL

Gegenstand der vorliegenden Erfindung sind herbizide Mittel, dadurch gekennzeichnet, daß sie einen Wirkstoff der Formel I,

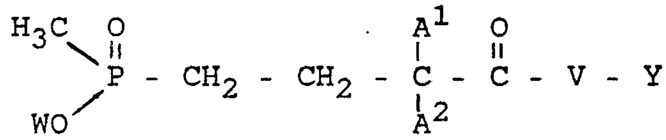

(I)

worin
$A^1$ = H und $A^2$ = $NH_2$ oder $A^1$, $A^2$ zusammen ein Sauerstoffatom,
V = O oder NH,
Y = im Falle V = O Wasserstoff oder $(C_1-C_4)$Alkyl oder
Y = im Falle V = NH einen Rest der Formeln $-CH(CH_3)-CONH-CH(CH_3)-COOH$ oder $-CH(CH_3)-CONH-CH-[CH_2CH(CH_3)_2]-COOH$ bedeutet und, unabhängig von der Bedeutung von V,
W = Wasserstoff bedeutet,
oder dessen Salz,
in Kombination mit einer Verbindung der Formel II oder II′ oder deren Salze

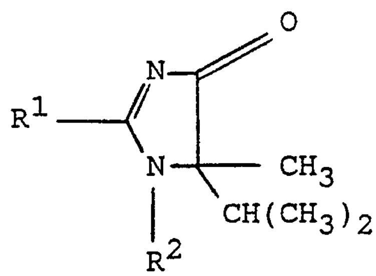

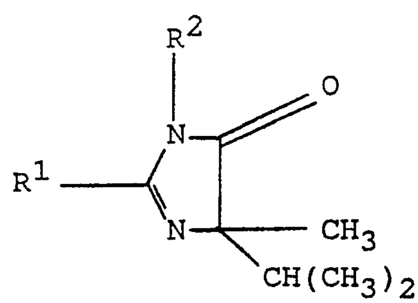

(II) (II')

worin
$R^1$ = Phenyl, Pyridyl, Chinolinyl, die alle gegebenenfalls ein- oder mehrfach durch $(C_1-C_4)$-Alkyl oder $(C_1-C_4)$-Alkoxy, die beide ein- oder mehrfach durch Halogen substituiert sein können, einen Rest der Formeln $-COOR^3$, $-COO-CH_2R^3-COOR^3$,
$-CH_2R^3-COO(C_1-C_4\text{-alkyl})$, oder $CH_2R^3-COOCH_2R^3-COOR^3$,
worin jeweils unabhängig voneinander $R^3$ = H oder $(C_1-C_4)$-Alkyl bedeutet,
oder einen Rest der Formel $-CH_2S(O)_n-(C_1-C_4)$-alkyl,
wobei n = 0, 1 oder 2 bedeutet, substituiert sind, und
$R^2$ = H, einen Rest der Formeln $-CONH(C_1-C_4\text{-alkyl})$, $-OCO(C_1-C_4\text{-alkyl})$, $-CO(C_1-C_4\text{-alkyl})$ bedeuten,
enthalten.

Im Fall $R^2$ = H liegen die beiden Formeln II und II′ im Tautomerengleichgewicht vor. In Abhängigkeit der Reste $R^2$ und der übrigen Substituenten kann daher die eine oder andere Form (II oder II′) vorliegen, s. DE-OS 2 833 274.

Die Verbindungen der Formel I mit V = O sind in US-A-4,168,963 und EP-PS 30424 beschrieben, während die Verbindungen der Formel I mit V = NH aus US-PS 4 309 208, S. Omura et al., The Japanese Journal of Antibiotics, Band XXXVIII-2, S. 542 (1985), H.S. Seto et al., The Journal of Antibiotics, Vol. XXXVI-1, S. 96 - 98 (1983) bekannt sind. Bevorzugt unter den Verbindungen der Formel I sind die Verbindungen

Ia: $A^1$ = H, $A^2$ = $NH_2$; V - Y = OH, W = H und deren Salze; Monoammoniumsalz, common name: Glufosinate-Ammonium.

Ib: $A^1$, $A^2$ = zusammen Sauerstoff; V - Y = OH, W = H und deren Salze.

Ic: $A^1$ = H, $A^2$ = $NH_2$; V = NH; Y = $-CH(CH_3)-CONH-CH(CH_3)COOH$ W = H und deren Salze; common name: Bialaphos.

Id: $A^1$ = H, $A^2$ = $NH_2$; V = NH; Y = $-CH(CH_3)-CONH-CH(CH_2CH-(CH_3)_2)COOH$, W = H und deren Salze; common name: Phosalacine (S. Omura et al. The Japanese Journal of Antibiotics, 37 (2), S. 542 (1985).

Bevorzugt unter den Verbindungen der Formel II und II′ seien genannt solche Verbindungen, worin

$R^1$ = Pyridyl, das durch ($C_1$-$C_4$) Alkyl, einen Rest der Formel $-COOR^3$, $-COOCH_2R^3-COOR^3$, $-CH_2R^3-COO(C_1-C_4\text{-alkyl})$, $-CH_2(R^3)-COOCH_2R^3-COOR^3$ oder $-CH_2-S(O)_n-(C_1-C_4\text{-alkyl})$ substituiert sein kann, und

$R^2$ = die obengenannte Bedeutung besitzt. (s. Japanische Offenlegungsschrift 59/225 180, EP-A 133 311, EP-A 41 624)

Von diesen Verbindungen II bzw. II′ seien beispielsweise genannt die Verbindungen

IIa: $R^1$ = 3-Methoxycarbonyl-2-pyridyl und
$R^2$ = Methylaminocarbonyl

IIb: $R^1$ = 3-Methoxycarbonyl-2-pyridyl und
$R^2$ = Ethylaminocarbonyl

IIc: $R^1$ = 3-Methoxycarbonyl-2-pyridyl
$R^2$ = Methoxycarbonyl

IId: $R^1$ = 3-Carboxy-2-pyridyl
$R^2$ = H; das Isopropylammoniumsalz besitzt den common name: Imazapyr.

Unter den Verbindungen der Formeln II bzw. II′ ist ferner von besonderer Bedeutung die Verbindung

IIe: $R^1$ = 2-Methoxycarbonyl-5-methyl-phenyl und $R^2$ = H.

Die erfindungsgemäßen Kombinationen erfassen auch die für die Landwirtschaft einsetzbaren Salze der Verbindungen der Formeln I bis II und II′.

Als solche kommen beispielsweise die üblichen Alkali-, Erdalkali-, substituierten oder unsubstituierten Ammonium-, Phosphonium- oder Sulfoniumsalze in Betracht. Unter den Erdalkali- und Alkalisalzen sind in erster Linie die Na-, K-, Mg- oder Ca-Salze zu nennen.

Ferner können die Verbindungen der Formel I auch Säureadditionssalze mit anorganischen Säuren wie HCl, HBr, $H_2SO_4$ oder $H_3PO_4$ oder mit organischen Säuren wie ($C_1$-$C_4$)-Carbonsäuren, chlorierten Essigsäuren, Weinsäure oder Zitronensäure bilden; diese werden ebenfalls von der Erfindung umfaßt.

Ferner umfassen Formel I und Formeln II bzw. II′ auch alle entsprechenden Stereoisomeren und deren Gemische, so daß diese ebenfalls unter die erfindungsgemäßen Kombinationen fallen.

Die genannten herbiziden Wirkstoffkombinationen zeigen eine überraschend hohe Wirksamkeit, die größer ist, als aufgrund der Wirkungen der Einzelkomponenten erwartet werden konnte.

Die erfindungsgemäßen Wirkstoffkombinationen erfassen ein breites Unkrautspektrum. Sie eignen sich beispielsweise zur Bekämpfung von annuellen und perennierenden Unkräutern wie beispielsweise Agropyron, Paspalum, Cynodon, Imperata, Pennisetum, Convolvulus, Cirsium, Rumex und andere.

Die erfindungsgemäßen Kombinationen lassen sich zur selektiven Bekämpfung von Schadpflanzen in Plantagenkulturen wie Ölpalme, Kokospalme, Gummibaum, Zitrus, Ananas, Baumwolle, Kaffee, Kakao u.a. sowie im Obst- und Weinbau einsetzen. Ebenso können die erfindungsgemäßen Kombinationen im Ackerbau im sogenannten "no till"- bzw. "zero till"-Verfahren eingesetzt werden. Sie können aber auch nicht-selektiv auf Wegen, Plätzen, Industrieanlagen etc. angewendet werden, um diese Flächen von unerwünschtem Pflanzenwuchs freizuhalten.

Die Mischungsverhältnisse der Verbindungen der Formel I zu den Verbindungen der Formeln II bzw. II′ können innerhalb weiter Grenzen insbesondere zwischen 500:1 bis 1:10 schwanken. Die Wahl des Mischungsverhältnisses ist abhängig von verschiedenen Parametern wie der Art der Mischungspartner, Entwicklungsstadium der Unkräuter und Unkrautspektrum. Vorzugsweise werden Mischungsverhältnisse von 100:1 bis 1:5 gewählt.

Die erfindungsgemäßen Kombinationen können sowohl in Form von Mischformulierungen - benetzbaren Pulver, Emulsionskonzentraten - vorliegen, die dann in üblicher Weise mit Wasser verdünnt zur Anwendung gebracht werden; sie können aber auch als sogenannte Tankmischungen durch gemeinsame Verdünnung der getrennt formulierten Komponenten mit Wasser hergestellt werden.

Die Aufwandmengen des Herbizids der Formel I in den Wirkstoffmischungen variieren im allgemeinen zwischen 0,25 und 4,0 kg/ha, während die Aufwandmengen der Verbindungen der Formeln II bzw. II′ im Bereich zwischen 0,01 und 5,0 kg/ha liegen können, speziell zwischen 0,05 und 2,0 kg a.i./ha.

Die erfindungsgemäßen Mittel können in den üblichen, dem Fachmann geläufigen Zubereitungen, z.B. als benetzbare Pulver, Stäubemittel, Granulate, Dispersionskonzentrate, emulgierbare Konzentrate oder versprühbare Lösungen, in den Handel gebracht werden. Die formulierten Mittel enthalten dabei die

Wirkstoffe im allgemeinen in Konzentrationen von 2 bis 95 Gew.-%.

Benetzbare Pulver sind in Wasser gleichmäßig dispergierbare Präparate, die neben den Wirkstoffen außer einem Verdünnungs- oder Inertstoff noch Netzmittel, z.B. polyoxethylierte Alkylphenole, polyoxethylierte Oleyl- oder Stearylamine, Alkyl- oder Alkylphenyl-sulfonate und Dispergiermittel, z.B. lignin-sulfonsaures Natrium, dinaphthylmethandisulfonsaures Natrium oder auch oleylmethyltaurinsaures Natrium enthalten.

Emulgierbare Konzentrate werden durch Auflösen des Wirkstoffgemisches in einem organischen Lösungsmittel, z.B. Butanol, Cyclohexanon, Dimethylformamid, Xylol oder auch höhersiedenden Aromaten und Zusatz eines nichtionischen Netzmittels, beispielweise eines polyoxäthylierten Alkylphenols oder eines polyoxäthylierten Oleyl- oder Stearylamins, erhalten.

In benetzbaren Pulvern variiert die Gesamt-Wirkstoffkonzentration zwischen etwa 10 % und 95 %, der Rest besteht aus den oben angegebenen Formulierungszusätzen. Bei emulgierbaren Konzentraten beträgt die Wirkstoffkonzentration etwa 10 % bis 80 % Staubförmige Formulierungen enthalten meistens 5 % bis 20 % an Wirkstoffen, versprühbare Lösungen etwa 2 % bis 20 %. Bei Granulaten hängt der Wirkstoffgehalt zum Teil davon ab, in welcher Form (flüssig oder fest) die Wirkstoffe vorliegen und welche Granulierhilfsmittel, Füllstoffe usw. verwendet werden.

Zur Anwendung werden die handelsüblichen Konzentrate gegebenenfalls in üblicher Weise verdünnt, z.B. bei benetzbaren Pulvern und emulgierbaren Konzentration mittels Wasser.

Staubförmige und granulierte Zubereitungen sowie versprühbare Lösungen werden vor der Anwendung nicht mehr mit weiteren inerten Stoffen verdünnt.

A. Formulierungsbeispiele

a) Ein Stäubemittel wird erhalten, indem man 10 Gewichtsteile Wirkstoffgemisch und 90 Gewichtsteile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoffgemisch, 64 Gewichtsteile kaolinhaltigen Quarz als Inertstoff, 10 Gewichtsteile ligninsulfonsaures Kalium und 1 Gewichtsteile oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoffgemisch mit 6 Gewichtsteilen Alkylphenolpolyglykolether (®Triton X 207), 3 Gewichtsteilen Isotridecanolpolyglykolether (8 AeO) und 71 Gewichtsteilen paraffinischem Mineralöl (Siedebereich z.B. ca. 255 bis über 377 °C) mischt und in einer Reibkugelmühle auf eine Feinheit von unter Mikron vermahlt.

d) Ein emulgierbares Konzentrat wird erhalten aus 15 Gewichtsteilen Wirkstoffgemisch, 75 Gewichtsteilen Cyclohexanon als Lösungsmittel und 10 Gewichtsteilen oxethyliertem Nonylphenol (10 AeO) als Emulgator.

B. Biologische Beispiele

Der Nachweis des Synergismus in den nachfolgenden Beispielen ergibt sich aus dem Vergleich des aus den Wirkungen der Einzelkomponenten errechneten additiven Wirkungsgrads mit dem experimentell gefundenen Wirkungsgrad der Wirkstoffkombinationen. Die Errechnung des additiven Wirkungsgrades erfolgt nach der Formel von S.R. Colby (vgl. Calculating synergistic and antagonistic responses of herbicide combinations, Weeds, 15, 1967, S. 20 bis 22).

Diese Formel lautet:

$$E = X + Y - \frac{X \cdot Y}{100}$$

wobei

X = % Schädigung durch Herbizid A bei x kg/ha Aufwandmenge,

Y = % Schädigung durch Herbizid B bei y kg/ha Aufwandmenge,

E = % die erwartete Schädigung der Herbizide A + B bei x + y kg/ha Aufwandmenge bedeuten.

Ist die tatsächliche Schädigung größer als berechnet, so ist die Wirkung der Wirkstoffkombination mehr als additiv, d.h., es liegt ein synergistischer Effekt vor.

Biologische Beispiele

In einem Feldversuch unter tropischen Bedingungen wurden die Präparate Glufosinate-Ammonium (Ia) und Imazapyr (IId) alleine und in Kombination in einem Bestand der Graminee Imperata cylindrica geprüft. Diese Gramineen-Art wies zur Zeit der Applikation eine Wuchshöhe von 80 bis 120 cm auf; die Blütenstände waren bereits ausgebildet. Die Versuchsfläche war durch Bäume nicht beschattet. Für die Behandlung wurde eine normale Rückenspritze verwendet; die Versuchs-Parzellen besaßen eine Fläche von 16 qm. Jede Behandlung wurde dreimal wiederholt. Die Auswertung erfolgte durch visuelle Schätzung der Schädigung.

Die Ergebnisse sind in der nachfolgenden Tabelle aufgelistet, wobei die Wirkungen als Durchschnittswerte der Schädigungen (in %) aus jeweils drei Versuchen ermittelt wurden. Die Klammerwerte stellen die nach der Colby-Formel zu erwartenden Werte dar.

Aus den Ergebnissen geht hervor, daß Ia alleine in den geprüften Dosierungen eine mittlere bis gute Anfangswirkung erzielt; im Laufe von 12 bis 20 Wochen fällt die Wirkung von Ia jedoch ab, da aus den unterirdischen Rhizomen ein Neuaustrieb erfolgt. Das Herbizid IId dagegen besitzt eine schwache Anfangswirkung, und selbst 12 Wochen nach der Applikation war die Wirkung nicht voll befriedigend.

Für die kombinierte Anwendung von Ia und IId, bei der die niedere und mittlere Dosierung für beide Produkte verwendet wurden, zeigte sich daß sowohl die Anfangs- wie auch die Dauerwirkung erheblich besser waren, als die der Einzelkomponenten; sie lagen deutlich höher als die nach der Colby-Formel errechneten Wirkungen. Demzufolge liegt ein Synergismus vor.

Tabelle

| Wirkung auf Imperata cylindrica | | | | |
|---|---|---|---|---|
| Produkt | Dosierung kga.i./ha | % Wirkung nach .. Tagen | | |
| | | 28 | 84 | 140 (d) |
| Ia | 1,5 | 53 | 34 | 13 |
| | 2,0 | 82 | 39 | 15 |
| | 3,0 | 89 | 62 | 54 |
| IId | 0,25 | 5 | 35 | 40 |
| | 0,375 | 7 | 50 | 55 |
| | 0,5 | 14 | 72 | 76 |
| Ia + IId | 1,5 + 0,25 | 68 | 93 | 74 |
| | | (55,35) | (57,1) | (47,8) |
| | 1,5 + 0,375 | 83 | 97 | 87 |
| | | (56,29) | (67,1) | (60,85) |
| | 2,0 + 0,25 | 85 | 98 | 82 |
| | | (82,9) | (60,35) | (49,0) |
| | 2,0 + 0,375 | 88 | 98 | 89 |
| | | (83,26) | (69,5) | (69,75) |

a.i. = Wirkstoff
Ia = Glufosinate-Ammonium
IId = Imazapyr
d = Tage

**Ansprüche**

1. Herbizide Mittel, dadurch gekennzeichnet, daß sie einen Wirkstoff der Formel I,

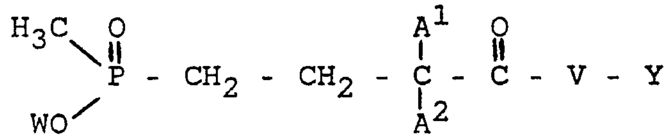

(I)

worin
$A^1$ = H und $A^2$ = $NH_2$ oder $A^1$, $A^2$ zusammen ein Sauerstoffatom,
V = O oder NH,
Y = im Falle V = O Wasserstoff oder $(C_1\text{-}C_4)$Alkyl oder
Y = im Falle V = NH einen Rest der Formeln $-CH(CH_3)-CONH-CH(CH_3)-COOH$ oder $-CH(CH_3)-CONH-CH-[CH_2CH(CH_3)_2]-COOH$ bedeutet und, unabhängig von der Bedeutung von V,
W = Wasserstoff bedeutet,
oder dessen Salz,
in Kombination mit einer Verbindung der Formel II oder II′ oder deren Salze

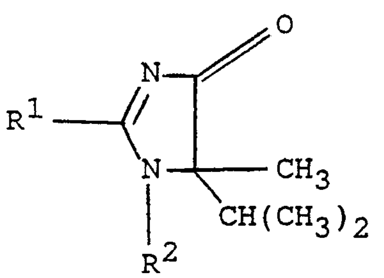

(II)

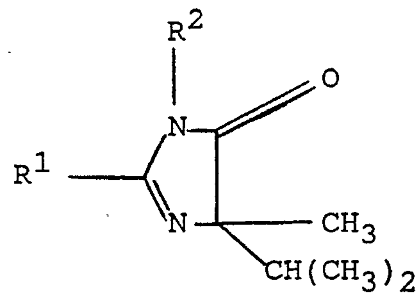

(II')

worin
$R^1$ = Phenyl, Pyridyl, Chinolinyl, die alle gegebenenfalls ein- oder mehrfach durch $(C_1\text{-}C_4)$-Alkyl oder $(C_1\text{-}C_4)$-Alkoxy, die beide ein- oder mehrfach durch Halogen substituiert sein können, einen Rest der Formeln $-COOR^3$, $-COO-CH_2R^3-COOR^3$,
$-CH_2R^3-COO(C_1\text{-}C_4\text{-alkyl})$, oder $CH_2R^3-COOCH_2R^3-COOR^3$,
worin jeweils unabhängig voneinander $R^3$ = H oder $(C_1\text{-}C_4)$-Alkyl bedeutet,
oder einen Rest der Formel $-CH_2-S(O)_n-(C_1\text{-}C_4)$-alkyl, wobei n = 0, 1 oder 2 bedeutet, substituiert sind, und
$R^2$ = H, einen Rest der Formeln $-CONH(C_1\text{-}C_4\text{-alkyl})$, $-OCO(C_1\text{-}C_4\text{-alkyl})$, $-CO(C_1\text{-}C_4\text{-alkyl})$ bedeuten, enthalten.

2. Herbizide Mittel gemäß Anspruch 1, die einen Wirkstoff der Formel I, worin
$A^1$ = H, $A^2$ = $NH_2$ bedeuten und V, Y, W die Bedeutungen nach Anspruch 1 besitzen, oder dessen Salz enthalten.

3. Herbizide Mittel gemäß Anspruch 1 oder 2, die eine Verbindung der Formel I, worin
$A^1$ = H, $A^2$ = $NH_2$, V-Y = OH und W = H bedeuten, oder deren Salz enthalten.

4. Herbizide Mittel gemäß Anspruch 1, dadurch gekennzeichnet, daß sie neben einer Verbindung der Formel I eine Verbindung der Formel II oder II′ oder deren Salz enthalten, wobei
$R^1$ = Carboxypyridyl oder $(C_1\text{-}C_4\text{-Alkoxy})$carbonylpyridyl und $R^2$ = H oder $-CONH(C_1\text{-}C_4)$alkyl bedeuten.

5. Herbizide Mittel gemäß einem oder mehreren der Ansprüche 1 bis 4, dadurch gekennzeichnet, daß das Mischungsverhältnis der Verbindungen der Formel I zu den Verbindungen der Formeln II bzw. II′ im Bereich zwischen 500 : 1 bis 1 : 10 ist.

6. Herbizide Mittel gemäß einem oder mehreren der Ansprüche 1 bis 5, dadurch gekennzeichnet, daß das Mischungsverhältnis der Verbindung der Formel I zu den Verbindungen der Formeln II bzw. II′ im Bereich zwischen 100 : 1 und 1 : 5 ist.

7. Verfahren zur Bekämpfung von Schadpflanzen, dadurch gekennzeichnet, daß man auf diese oder die Anbaufläche ein herbizides Mittel gemäß einem oder mehreren der Ansprüche 1 bis 6 in einer wirksamen Menge appliziert.

8. Verwendung von herbiziden Mitteln gemäß einem oder mehreren der Ansprüche 1 bis 6 zur Bekämpfung von Schadpflanzen.

Europäisches Patentamt

# EUROPÄISCHER RECHERCHENBERICHT

Nummer der Anmeldung

**EP 90 11 7740**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| L | DE-A-3 615 711 (HOECHST)<br>* Dokument, das den Prioritätsanspruch fraglich zu lassen erscheint * | 1-8 | A 01 N 57/20 //<br>(A 01 N 57/20<br>A 01 N 43:50 ) |
| E | EP-A-0 256 942 (MEIJI SEIKA KAISHA LTD)<br>* Patentansprüche * | 1-8 | |
| A | EP-A-0 162 326 (HOECHST)<br>* Patentansprüche * | 1-8 | |
| A | EP-A-0 076 470 (HOECHST)<br>* Patentansprüche * | 1-8 | |

RECHERCHIERTE SACHGEBIETE (Int. Cl.5)

A 01 N

Der vorliegende Recherchenbericht wurde für alle Patentansprüche erstellt

| Recherchenort | Abschlußdatum der Recherche | Prüfer |
|---|---|---|
| Den Haag | 28 November 90 | FLETCHER A.S. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument